(19)

Europäisches
Patentamt
European
Patent Office
Office européen
des brevets

(11) **EP 2 365 292 A2**

(12) **EUROPEAN PATENT APPLICATION**

(43) Date of publication:
**14.09.2011 Bulletin 2011/37**

(51) Int Cl.:
***G01D 5/38*** *(2006.01)*

(21) Application number: **11157480.2**

(22) Date of filing: **09.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.03.2010 JP 2010052575**

(71) Applicant: **Canon Kabushiki Kaisha
Tokyo 146-8501 (JP)**

(72) Inventor: **Ishizuka, Ko
Tokyo 146-8501 (JP)**

(74) Representative: **TBK
Bavariaring 4-6
80336 München (DE)**

(54) **Optical encoder and displacement measurement apparatus**

(57)     An optical encoder (10, 20, 30) includes a light-emitting element (LED), a scale grating (SCL) configured to transmit or reflect a divergent light from the light-emitting element to divide the divergent light into a plurality of lights, an optical mask grating (SLT) configured to modulate the plurality of lights with phases thereof different from each other in accordance with a relative movement between the light-emitting element and the scale grating, and a light-receiving element array (PDA) including a plurality of light-receiving elements configured to receive the modulated plurality of lights.

FIG. 1

EP 2 365 292 A2

**Description**

Field of the Invention

The present invention relates to an optical encoder and a displacement measurement apparatus.

Description of the Related Art

In a conventional optical encoder, for example, a divergent light emitted from a surface light-emitting element such as an LED is illuminated onto a scale grating, and its grating image is enlarged twice and projected onto a light-receiving element array. The grating image has an intensity distribution of a pseudo sinusoidal wave shape, and four-phase pseudo sinusoidal wave signals of A+, B+, A-, and Bare detected by performing the projection so that a light and dark cycle corresponds to four elements of the light receiving element array to be collected for every four electrodes. For such signals, a wave number and a phase of the sinusoidal wave signals are calculated by a signal processing circuit, and the calculated signals are outputted as position information.

Japanese Patent Laid-Open No. 2005-043192 discloses an optical encoder using a surface-emitting laser and a reflective scale.

In order to improve the resolution of the optical encoder around two to three times, the width of the light-emitting region of the light-emitting element needs to be reduced, the pitch of the scale grating needs to be narrowed around two to three times, and also the pitch of the light-receiving element array needs to be narrowed around the same range. However, specifically, changing the shape of the light-emitting element or the light-receiving element is not economical when it is manufactured by using a semiconductor process. If the pitch of the scale grating is narrowed, the distance between the scale grating and the light-receiving element array needs to be narrowed by the influence of the diffraction.

SUMMARY OF THE INVENTION

The present invention provides an optical encoder and a displacement measurement apparatus advantageous in terms of low cost and high resolution.

The present invention in its first aspect provides an optical encoder as specified in claims 1 to 4.

The present invention in its second aspect provides a displacement measurement apparatus as specified in claim 5.

Further features and aspects of the present invention will become apparent from the following description of exemplary embodiments with reference to the attached drawings.

BRIEF DESCRIPTION OF THE DRAWINGS

Fig. 1 is an overall configuration diagram of an optical encoder in a first embodiment.

Fig. 2 is a development diagram of an optical encoder in a first embodiment.

Fig. 3 is a development diagram of an optical encoder in a second embodiment.

Fig. 4 is a development diagram of an optical encoder in a third embodiment.

DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

[FIRST EMBODIMENT]

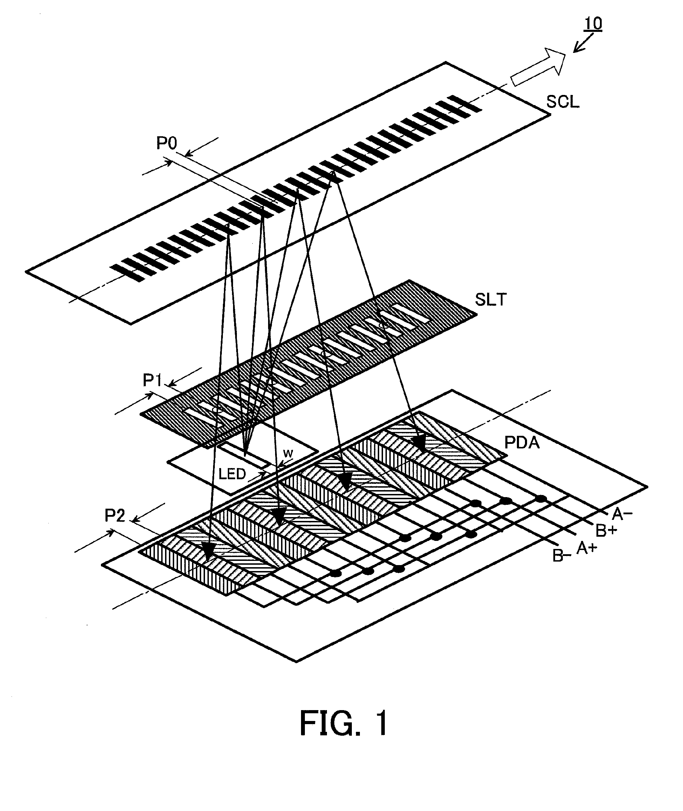

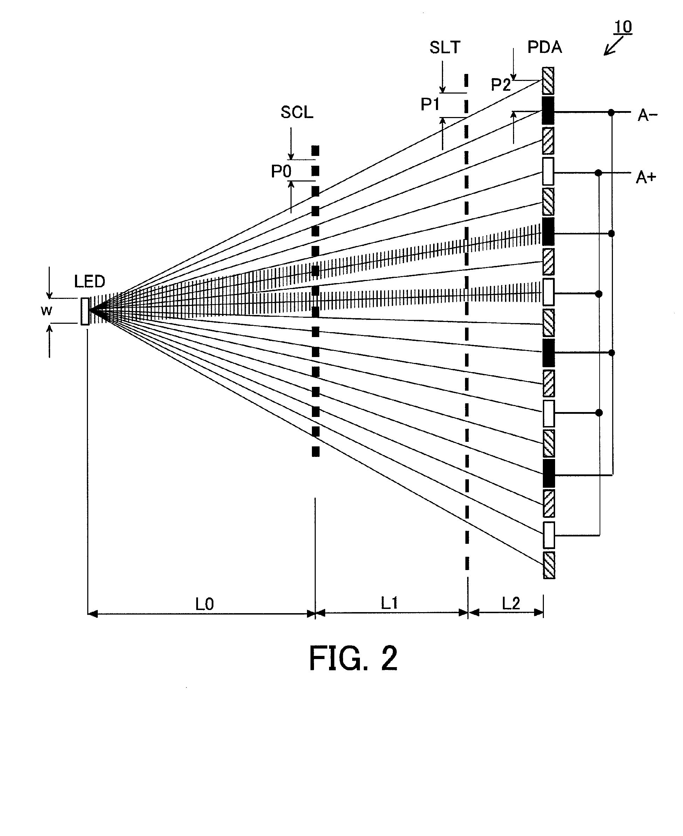

First of all, an optical encoder in a first embodiment of the present invention will be described. Fig. 1 is an overall configuration diagram (a perspective diagram) of an optical encoder 10 in the present embodiment. Fig. 2 is a development diagram of the optical encoder 10. The optical encoder 10 uses a light-emitting element LED (a surface light-emitting element) as a light source and a light-receiving element array PDA (pitch P2=40 $\mu$m) having a plurality of light-receiving elements as a light-receiving region, and has an optical system that enlarges a scale image to project it onto the light-receiving element array PDA as a base. A reflective scale grating SCL is disposed at an intermediate position between the light-emitting element LED and the light-receiving element array PDA. The scale grating SCL is configured to be able to relatively move with reference to the light-emitting element LED, and reflects a divergent light from the light-emitting element LED to divide it into a plurality of lights spatially and periodically. The light-receiving element array PDA is configured so that the plurality of lights from the scale grating SCL enter corresponding light-receiving elements. As illustrated in Figs. 1 and 2, the light-receiving element array PDA collects electric power for every N elements of the plurality of light-receiving elements, and is connected with common electrodes (A+ phase, A-phase, and the like).

The light-emitting element LED (a surface-emitting light source such as a light-emitting diode or a surface-emitting laser diode) is preferably has a light-emitting surface shape of a rectangle whose lateral direction is a direction along which elements of the scale grating SCL are arrayed. The width w (the length of the lateral direction of the rectangle) is, for example, set to around $40\mu$m. The divergent light emitted from the light-emitting element LED illuminates the scale grating SCL (the reflective scale grating) that is disposed at a distance L0 from the light-emitting element LED and that has a pitch P0. A reflected enlarged image by the scale grating SCL (a light reflected on the scale grating SCL) selectively transmits through an optical mask grating SLT (a slit array having a pitch P1), and enters each light-receiving element of the light-receiving element array PDA.

The optical mask grating SLT is disposed between the scale grating SCL and the light-receiving element array PDA. The optical mask grating SLT is configured so that the plurality of lights entering the light-receiving element array PDA have a phase difference from each other to periodically be modulated in accordance with the relative movement with respect to the light-emitting element LED of the scale grating SCL.

The optical encoder 10 of the present embodiment meets the following Expression (1), where L0 is a distance between the light-emitting element LED and the scale grating SCL, L1 is a distance between the scale grating SCL and the optical mask grating SLT, and L2 is a distance between the optical mask grating SLT and the light-receiving element array PDA.

$$L0=L1+L2 \ ... \ (1)$$

In the embodiment, the optical mask grating SLT is disposed at a position of the distance L1 from the scale grating SCL, and is configured to limit a region of the light from the light-emitting element LED and to introduce the light to the corresponding four-phase light-receiving element array PDA (pitch P2=$40\mu$m). Therefore, in appearance, it is equivalent to the configuration in which the light-receiving element array PDA is disposed at a position of the optical mask grating SLT. In the present embodiment, the pitch P1 of the optical mask grating SLT is configured so as to meet the following Expression (2).

$$P1=P2 \times L0/(L0+L1+L2) \ ... \ (2)$$

In Fig. 2, the regions of the lights entering the A+ phase and A- phase light-receiving elements are indicated by hatching. When the scale grating SCL of the pitch P0 is positioned in a state illustrated in Fig. 2, a main part of the light entering the A+ phase is not cut off by the scale grating SCL. On the other hand, a main part of the light entering the A- phase is cut off by the scale grating SCL. The light other than the A+ phase and A- phase lights is cut off by half.

In the present embodiment, the pitch P0 of the scale grating SCL is configured so as to meet the following Expression (3), where N is the number of phases.

$$P0=P1 \times L0/(L0+L1) \times N/(N-1)$$
$$=P2 \times L0/(L0+L1+L2) \times N/(N-1)$$
$$=2/3 \times P2 \ ... \ (3)$$

Therefore, four-phase pseudo sinusoidal wave signals that have phases different by 90 degrees from each other are outputted from the light-receiving element array PDA. The period of these signals is the same as the pitch P0 of the scale grating SCL. Therefore, according to Expression (3) described above, the period of the signals (=P0) is $26.66\mu$m when the pitch P2 of the light-receiving elements adjacent to each other in the light-receiving element array PDA is $40\mu$m.

In the embodiment, when the limit relating to the width w (the length in the direction along which the elements of the scale grating SCL are arrayed, i.e. an arrow direction in Fig. 1) of the light-emitting region of the light-emitting element LED is calculated, it is preferable that the width w of the light-emitting region meets the following Expression (4). When the light-emitting region is a point light source, a width P1/2 of an opening of the optical mask grating SLT is enlarged and is projected on a light-receiving unit, and its size w0 is represented as w0=P1/2×(L0+L1+L2)/(L0+L1). When the light-emitting region is a light source having the width w, the enlarged size w1 by one side edge of the opening of the optical mask grating SLT is w1=w×L2/ (L0+L1). Therefore, the size that the light source having the width w projects onto the light-receiving element is represented by w0+w1. The size w0+w1 has the maximum value when P2=(w0+w1) is met for the pitch P2 of cells of the light-receiving element array. A permissible value is a case where P2≥ (w0+w1), i.e. P2≥P1/2×(L0+L1+L2)/(L0+L1)+w×L2/(L0+L1) is met. When this is transformed into a conditional expression for the size w of the light source, the following Expression (4) is obtained.

$$w \leq \{-P1/2+(P2-P1/2) \times (L0+L1)/L2\} \ \dots \ (4)$$

In an optical system where conditions of P2=40μm, L1=L2, and L0=L1+L2 are met, since P1=P2/2 and P0=2/3×P2 are obtained by Expressions (2) and (3) respectively, w≤80μm is finally obtained in Expression (4). Thus, the optical encoder of the embodiment can function as an optical encoder which has a resolution of 26.66μm using a floodlight/light-receiving unit that is used for the optical encoder having the resolution of 80μm in a state where the width w of the light-emitting region is 40μm that is an original width.

The optical encoder 10 of the present embodiment is represented as the following Expression (5) as a general expression.

$$P0=P2 \times L0/(L0+L1+L2) \times N/(N-1) \ \dots \ (5)$$

The conditional expression represented as Expression (5) is rewritten to conditional expressions represented by the following Expressions (6) and (7), considering L0, L1, and L2 contain certain amounts of errors. In the embodiment, the light-receiving element array PDA has M light-receiving elements (effective elements), and collects electric power for every N light-receiving elements of the M light-receiving elements to be outputted (the number of phases: N).

$$P0<\{P2 \times (L0+L1)/(L0+L1+L2)\} \times (1+0.25 \times M/N) \ \dots \ (6)$$

$$P0>\{P2 \times (L0+L1)/(L0+L1+L2)\} \times (1-0.25 \times M/N) \ \dots \ (7)$$

It is preferable that the optical encoder 10 of the present embodiment is configured to further meet Expression (4) described above.

[SECOND EMBODIMENT]

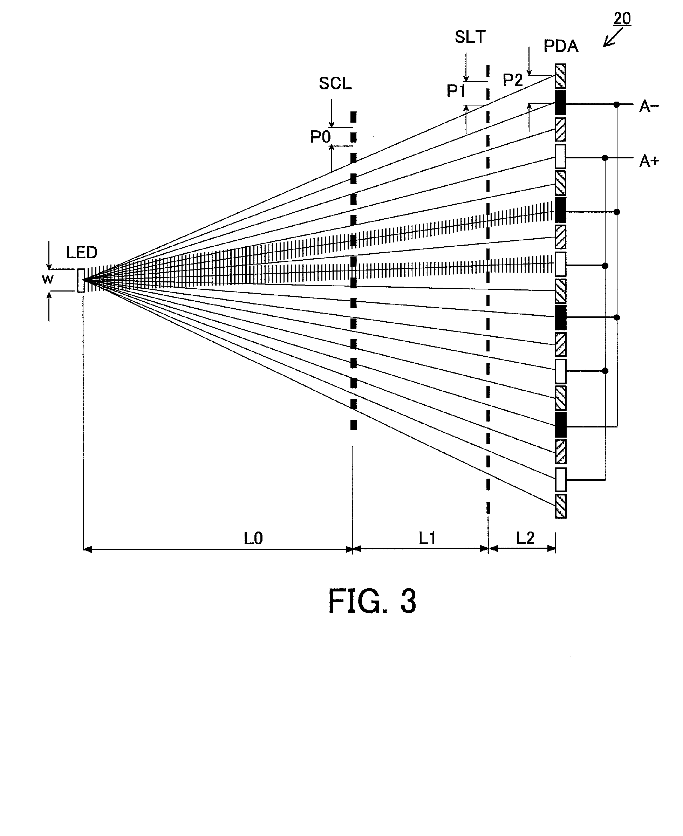

Next, an optical encoder in a second embodiment of the present invention will be described. Fig. 3 is a development diagram of an optical encoder 20 in the present embodiment. The optical encoder 20 has a scale grating SCL that is disposed at a predetermined position (L0≠L1+L2) other than an intermediate position between a light-emitting element LED and a light-receiving element array PDA (pitch P2=40μm), and has an optical system that projects its grating image onto the light-receiving element array PDA as a base. In other words, the present embodiment assumes that the light-receiving element array PDA and the light-emitting element LED are installed at heights different from each other.

Similarly to the first embodiment, the divergent light emitted from the light-emitting element LED illuminates the scale grating SCL (the reflective scale grating) having a pitch P0 that is disposed at a distance L0 from the light-emitting element LED. Then, a reflected enlarged image by the scale grating SCL transmits through the optical mask grating SLT (slit arrays of pitch P1), and the transmitted light enters each light-receiving element of the four-phase light-receiving element array PDA. In the embodiment, a distance between the scale grating SCL and the optical mask grating SLT is defined as L1, and a distance between the optical mask grating SLT and the light-receiving element array PDA is defined as L2.

The optical mask grating SLT is configured to limit a region of the light from the light-emitting element LED and introduce lights into the corresponding light-receiving element array (pitch P2=40$\mu$m) when considering that the scale grating SCL is removed. Therefore, in appearance, it is equivalent to the configuration in which the light-receiving element array is disposed at a position of the optical mask grating SLT at a pitch P1.

In Fig. 3, the regions of the lights entering the A+ phase and A- phase light-receiving elements are indicated by hatching. When the scale grating SCL having a pitch P0 is positioned in a state illustrated in Fig. 3, a main part of the lights entering the A+ phase is not cut off by the scale grating SCL. On the other hand, a main part of the lights entering the A-phase is cut off by the scale grating SCL. The lights other than the A+ phase and A- phase lights are cut off by half.

In the present embodiment, when the pitch P0 of the scale grating SCL is configured to meet the following Expression (8) on condition that the number of phases is N, four-phase pseudo sinusoidal wave signals that have phases different by 90 degrees from each other are outputted from the light-receiving element array PDA. The period of these signals is the same as the pitch P0 of the scale grating SCL.

$$\texttt{P0=P2}\times\texttt{L0/(L0+L1+L2)}\times\texttt{N/(N-1)}$$

$$\texttt{=P2}\times\texttt{\{L0/(L0+L1+L2)\}}\times\texttt{4/3 ... (8)}$$

[THIRD EMBODIMENT]

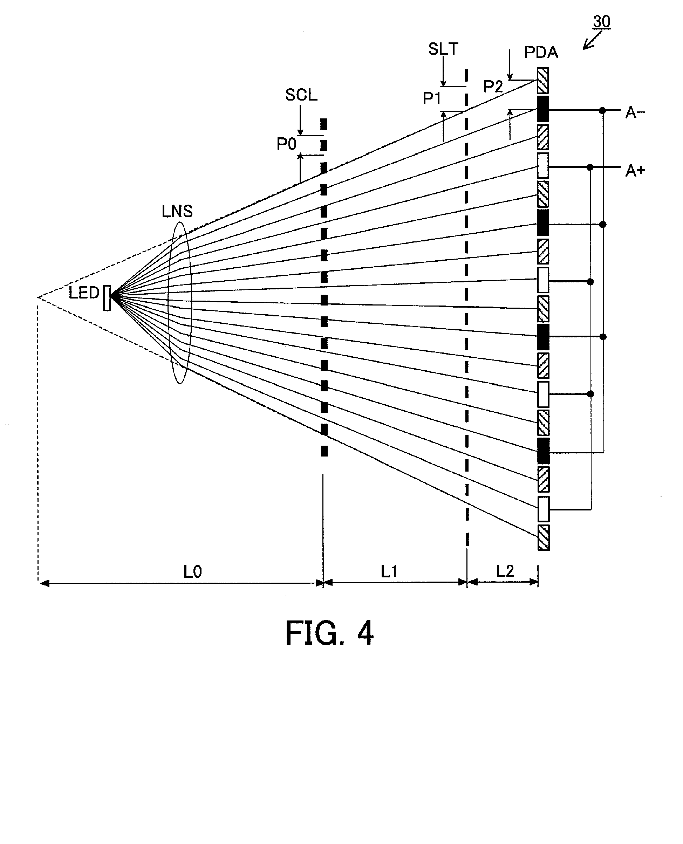

Next, an optical encoder in a third embodiment of the present invention will be described. Fig. 4 is a development diagram of an optical encoder 30 in the present embodiment. In the optical encoder 30, a lens LNS that has a condensing function is disposed immediately after the light-emitting element LED (between the light-emitting element LED and the scale grating SCL). A light intensity that enters the light-receiving element array PDA can be increased by adding the lens LNS. As a result, as illustrated in Fig. 4, the light is emitted so that the light-emitting element LED is positioned on an extended line of a dashed line, i.e. so that the light-emitting element LED exists at a position of a distance L0 from the scale grating SCL. Therefore, in the present embodiment, the light equivalent to the light of the second embodiment is illuminated onto the light-receiving element array PDA, and its conditional expression is the same as that of the second embodiment.

According to each of the above embodiments, the optical mask grating is additionally disposed between the light-emitting element (the light source) and the light-receiving element array to be able to provide the optical encoder with low cost and high resolution.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

For example, in each of the above embodiments, the light-emitting element can be configured by using a point light-emitting element instead of the surface light-emitting element, or a transmissive scale grating can be adopted instead of the reflective scale grating. The transmissive scale grating transmits the divergent light from the light-emitting element to divide it into a plurality of lights spatially and periodically.

A rotary encoder instead of the linear encoder can also be applied as the optical encoder. Furthermore, the optical mask grating may also be configured to be directly printed on packages of the light-emitting element and the light-receiving element instead of adding it as a discrete component, or the light-receiving element array may also be configured to output three-phase or six-phase signals instead of the four-phase signals. Using the optical encoder of each of the above embodiments, a displacement measurement apparatus, a stage positioning apparatus, a semiconductor exposure apparatus, a machining apparatus, or the like, with low cost and high resolution can be provided.

An optical encoder (10, 20, 30) includes a light-emitting element (LED), a scale grating (SCL) configured to transmit or reflect a divergent light from the light-emitting element to divide the divergent light into a plurality of lights, an optical mask grating (SLT) configured to modulate the plurality of lights with phases thereof different from each other in accordance with a relative movement between the light-emitting element and the scale grating, and a light-receiving element array (PDA) including a plurality of light-receiving elements configured to receive the modulated plurality of lights.

**Claims**

1. An optical encoder (10, 20, 30) comprising:

a light-emitting element (LED);
a scale grating (SCL) configured to transmit or reflect a divergent light from the light-emitting element to divide the divergent light into a plurality of lights;
an optical mask grating (SLT) configured to modulate the plurality of lights with phases thereof different from each other in accordance with a relative movement between the light-emitting element and the scale grating; and
a light-receiving element array (PDA) including a plurality of light-receiving elements configured to receive the modulated plurality of lights.

2. The optical encoder according to claim 1, wherein the optical encoder is configured such that a condition based on a following expression is satisfied,

$$P0=P2\times L0/(L0+L1+L2)\times N/(N-1),$$

where P0 is a pitch of the scale grating, P2 is a pitch of the light-receiving element array, L0 is a distance between the light-emitting element and the scale grating, L1 is a distance between the scale grating and the optical mask grating, and L2 is a distance between the optical mask grating and the light-receiving element array, N is a number of the phases.

3. The optical encoder according to claim 2, wherein a number of the light-receiving elements is M, the light-receiving element array is configured to collect outputs from every N light-receiving elements of the light-receiving element array and to output N collected outputs, and the condition is defined by a following expression,

$$P0<\{P2\times(L0+L1)/(L0+L1+L2)\}\times(1+0.25\times M/N)$$

and

$$P0>\{P2\times(L0+L1)/(L0+L1+L2)\}\times(1-0.25\times M/N).$$

4. The optical encoder according to claim 2, wherein the optical encoder is configured such that a condition defined by a following expression is satisfied,

$$w\leq\{-P1/2+(P2-P1/2)\times(L0+L1)/L2\}$$

where w is a width of a light-emitting region of the light-emitting element in a direction along which elements of the scale grating are arrayed.

5. A displacement measurement apparatus comprising an optical encoder according to any one of claims 1 to 3.

FIG. 1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005043192 A